# EUROPEAN PATENT SPECIFICATION

(11) **EP 2 797 079 B1**
(45) Date of publication and mention of the grant of the patent: **18.11.2015**
(21) Application number: 14165344.4
(22) Date of filing: 22.04.2014
(51) Int. Cl.: G10L 21/10, G10L 15/26, G10L 15/01

(54) **A device for aiding hearing impared people in understanding speech**
Vorrichtung zur Unterstützung von hörgeschädigten Menschen beim Verstehen von Sprache
Dispositif d'aide à des personnes à audition diminuée pour la compréhension de la parole

(30) Priority: 23.04.2013 EP 13165022; 10.09.2013 EP 13004396
(43) Date of publication of application: 29.10.2014
(73) Proprietor: van Overbeek, Michiel Wilbert Rombout Maria, 6891 AL Rozendaal (NL)
(72) Inventor: van Overbeek, Michiel Wilbert Rombout Maria, 6891 AL Rozendaal (NL)
(74) Representative: Janssen, Paulus J. P.

(56) References cited:
- DE-A1-102007 025 861
- GB-A- 2 375 935
- US-A1- 2002 158 816
- US-A1- 2007 100 626
- US-A1- 2011 037 606
- ANDREAS MAIER ET AL: "Intelligibility Is More Than a Single Word: Quantification of Speech Intelligibility by ASR and Prosody", 3 September 2007 (2007-09-03), TEXT, SPEECH AND DIALOGUE; [LECTURE NOTES IN COMPUTER SCIENCE], SPRINGER BERLIN HEIDELBERG, BERLIN, HEIDELBERG, PAGE(S) 278 - 285, XP019080924, ISBN: 978-3-540-74627-0 * abstract * * paragraph [0022] * * paragraph [0006] *

## Description

### Field of the invention

The present invention pertains to a device to be worn by a first person that is hearing impaired, in order to aid this person in understanding a speech of a second person directed to the first person, the device comprising a sensor for detecting sound waves corresponding to words used in the speech and converting these sound waves into a first signal, a converter for real-time converting the first signal into a second signal that corresponds to the words, and presentation means for presenting the second signal to the first person.

### Background art

It is commonly known in the art how to sense speech and transform speech into symbols that represent the content of the speech. Speech recognition technology to actually recognize spoken words and display text that corresponds to these words on a display is commonly available in the art. Software is freely available and many Apps that use speech recognition technology can be obtained for smartphones such as the iPhone™ or Blackberry™. For many years this technology has been used to improve the communication a hearing impaired person has with another person, in particular to better understand the speech of this other person.

A device for helping hearing impaired people in understanding speech of other persons incorporating this technology is known from US 6,005,536. This patent discloses so called captioning glasses, a display device wearable by a hearing impaired person, which device enables speech of another person to be detected, and real-time converted in written text that is displayed to the hearing impaired person in his field of vision. This way, the hearing impaired person can look into the eyes of the other person while understanding the other persons speech.

US 4,972,486 describes a wearable device for aiding a hearing impaired person to understand speech of another person. This device displays on the eyeglasses symbols resembling hand signs that correspond to the words spoken by the other person.

US 5,475,798 discloses a device as described here above, which device comprises a pair of glasses worn by the hearing impaired person and operatively connected to that pair of glasses a separate unit incorporating a microphone for detecting sound waves and converting these into electrical signals, and a converter for real-time converting the electrical signals into text that is presented to the hearing impaired by displaying the text onto the eye-glasses.

US 2002/0158816 discloses a translating eyeglasses, converting speech to text and displaying the text within the field of view of a user wearing said eyeglasses.

### Object of the invention

It is an object of the invention to even improve the communication possibilities of a hearing impaired person, in particular to improve the capability of understanding speech while using speech recognition technology.

### Summary of the invention

In order to meet the object of the invention, a device as described in the "Field of the invention" section (*supra*) has been devised, wherein the device comprises means to assess the understandability of the second signal and means to provide the second person information corresponding to the said understandability of the second signal. Such information could for example be as simple as a little red light present on captioning glasses and blinking when there is insufficient recognition of the words, but it could also be more sophisticated such as a text signal appearing on a hand-held device such as a smartphone indicating that the second person talks too fast, or too loud, or with an inadequate pronunciation.

It was applicant's recognition that although the technology to recognize speech is available and of very good quality nowadays, often the hearing impaired still has problems in understanding the second signal as presented to him. For example, if the second signal is presented as text on the eye-glasses of a pair of captioning glasses, it may be that the number of words per time period is too high to be adequately followed by the hearing impaired person. The same may be true when the second signal comprises an acoustic actuating of the ear of the hearing impaired person. And even if the hearing impaired person would be able to follow the second signal even if it corresponds to a very high number of words per time period, it may very well be that the speech recognition as such is inadequate, for example because of the other person talking too quietly, or because this person does not pronounce very well, or simply because this person speaks a language or dialect which are hard to recognize by the device (typically because the software is not suitable to recognize this language or dialect). The evident result of this is that the understandabilty of the second signal might become inadequate, for example because the first person is not able to follow the number of words per time unit, or simply cannot understand a certain percentage of the words since the device did not recognize them as actual existing words. In any case, even when using the devices as known from the prior art, the hearing impaired person often has problems in understanding the speech of the other person.

Applicant recognized that a hearing impaired person sometimes ultimately mitigates or even solves the above described problems by simply telling the other person to speak slower, or harder, or to pronounce better, give appropriate hand signals etc. However, before this feedback is given, often a couple of minutes of (bad) conversation have gone by. Also, many hearing impaired people find it annoying to actively give this feed-back since it interferes with the actual conversation. Therefore, bad understanding of speech, or parts of the speech due to an inadequate understandability of the second signal is often taken for granted.

Applicant recognized that in addition to a person (the hearing impaired person) not being able to understand the speech due to a too low understandability of the second signal, the speech recognition technology itself is very well capable of automatically assessing the understandability of the second signal and therewith the quality of the speech. In particular, the number of recognized words per time period and the percentage of recognized words are relatively easily assessed automatically (recognition in this sense typically means that the word found by the technology matches a word in a library). These aspects directly relate to properties of the speech, in particular the number of words per time period in the speech, the volume of speech, and the pronunciation of the words. Applicant recognized that the device providing the second person information corresponding to the understandability of the second signal, in in fact equals providing information that reflects a property of his speech, and thus provides an adequate feed-back to the second person about his speech quality. This is a great improvement over relying on the hearing impaired person itself to provide feed-back (e.g. verbally or manually) to the second person about a property of his speech. Feed-back may be given in a very early stage after the speech recognition problems start, and in any case without the hearing impaired person having to feel as an intruder of the conversation since he can rely on the device giving the feed-back instead of himself providing verbal or manual feed-back. It is noted that the feed-back information need not be very specific as to the property of the speech. For example, the same kind of information, such as a red light blinking, may be used to reflect any property that prevents a good speech recognition. This insight was based on the experience that any person talking typically starts to talk slower and with a better pronunciation as soon as he receives information that the quality of speech in general is bad. Talking slower and pronouncing better solves the majority of problems of speech recognition.

It is noted that in the present invention, the first signal is for use by the device itself, and typically, but not necessarily, this signal is an electrical signal as generated by a microphone. The second signal is of the type that can be understood by the first person to a representation of the words of the speech, e.g. a sound wave in the ear, other type of signal to actuate parts of the ear, symbols to be displayed on a screen, eyeglasses or as a hologram, or anything else that can be perceived by the first person and understood to be representative of the words of the speech.

It is also noted that the wearable device does not need to be of a unit construction. A device that for example comprises a microphone carried on a belt, a processing unit that is kept in a pocket and connected to the microphone via wireless connection and a display, such as a pair of eyeglasses, that on its turn has a wireless connection with the processing unit is also considered "a device" in the sense of the present invention.

### Definitions

A *speech* is an act of expressing or describing thoughts, feelings, or perceptions by the articulation of words.

To *wear* is to carry or have on the person as covering, adornment, protection, appliance or tool.

To *reflect* is to make apparent, express or manifest.

*Automatically* is without operator intervention. It may thus be operator initiated or stopped, but to carry it out, no help from an operator is needed.

### Embodiments of the invention

In an embodiment of the invention, the understandability depends on parameters provided by the first person to the device. Although understandability could be defined objectively, for example "between 100 and 250 words per minute" and "at least 90% of the words are recognised by the device". However, a first person may find him or herself capable of reading up to 500 words per minute and also, requires that only 70% of the words is recognised by the device and still he or she is able to adequate follow the speech. Also, some persons are capable of reading a different language that a preprogrammed language and might thus upload a dictionary and grammar rules of yet another language into the processor of the device, so that the device can also provide a second signal that corresponds to this language. In this embodiment feed-back is provided that matches the language skills of the first person.

In another embodiment the device comprises a processing unit for assessing the understandability of the second signal and automatically providing the information corresponding to the said understandability to the second person. Although one could use a device in which the hearing impaired person itself triggers the device to provide the information about the understandability of the second signal, and hence the speech of the second perosn (for example by actuating a switch that initiates providing the information), it is a far better solution to have the device assess the understandability of the second signal, for example the number of words per minute or the percentage of words recognised, and automatically provide the corresponding information to the second person. This way, the feed-back is provided almost immediately, almost at the same time, or even before, the hearing impaired person is starting to notice that the information he is receiving via the presentation of the second signal might be an inadequate reflection of the speech. Also, knowing that the device will give appropriate feedback automatically to the person talking to the hearing impaired, makes sure that the hearing impaired person can fully concentrate on the conversation as such, and does not need to worry about giving feed-back. This means a great improvement of overall communication quality.

In another embodiment the information is provided by generating one or more light signals. Light signals have proven to be a very simple and adequate way of presenting information about a property of the speech. A simple red light blinking almost automatically lead to people talking more slowly and pronouncing better, the two most important changes to improve speech recognition. In a further embodiment the one or more light signals are generated by one or more light emitting diodes. Such diodes are small, can easily be integrated in any device and are capable of producing an adequate light signal at the cost of hardly any energy. In yet a further embodiment the light signals have a colour that corresponds to the understandability of the second signal and thus to the quality of the speech in respect of the ability to be converted into the second signal. In this embodiment, "red" is the typical colour that corresponds to bad quality of speech, meaning that a substantial part of the speech cannot be adequately converted into a second signal that corresponds to the speech, and "green" is the colour that corresponds to good quality of the speech. This perception of what colour is suitable to express "good" and "bad" quality may vary however from country to country.

In an embodiment the understandability is assessed using the number of words per time period, and/or a percentage of words recognised. Such properties are typically not determined as such (directly) by the device, but are deduced from an assessment of the speech recognition process. After the speech recognition process has led to the second signal that corresponds to the words of the speech, it can be determined (in fact: estimated, since there is always a level of uncertainty) automatically (by the programmed software code) what the number of words per period of time is and what the percentage of (un)recognised words is. The latter corresponds typically to the property "pronunciation of the words". For these and other properties of the speech, typically thresholds are used above or under which threshold the assessment turns from "good" to "bad". Such threshold could for example be "100 words per minute", "95% of the words recognised" etc. In an embodiment the hearing impaired user of the device is able to set the value for each threshold.

In yet another embodiment the information is additionally presented to the first person. For example, when the device comprises a display for the second signal (typically the eye-glasses of a pair of captioning glasses), the information reflecting a property of the speech is also presented as written text on the display. For example, the display could show "too fast", "volume to low", "volume to hard", "pronunciation not good", "language not recognised". The hearing impaired person is then in a position, for example when asked by the other person talking "what is wrong with my talking?" to explain precisely how he could improve his quality of speech.

In an embodiment wherein the second signal comprises one or more symbols, the symbols are displayed into the field of vision of the first person. This embodiment allows the hearing impaired person to remain in eye contact with the person speaking to him, and still be able to see and understand the symbols that represent the words spoken. In a preferred embodiment the symbols form text.

In still another embodiment the sensor is in essence unidirectional (in essence meaning that it cannot be prevented totally that sound waves from other directions reach the sensor). A unidirectional sensor has the advantage that sound other than the sound the person who is talking is making will not or hardly interfere with the speech recognition process. Since the hearing impaired person can easily direct the sensor towards the person talking to him, the unidirectional sensor is perfectly adequate for use in inter person communication. In a preferred embodiment the sensor comprises an array of microphones, preferably at least partly incorporated in a leg of a pair of glasses.

### Figures

Figure 1 depicts a device according to the invention.
Figure 2 schematically shows parts of the device according to figure 1.

### Figure 1

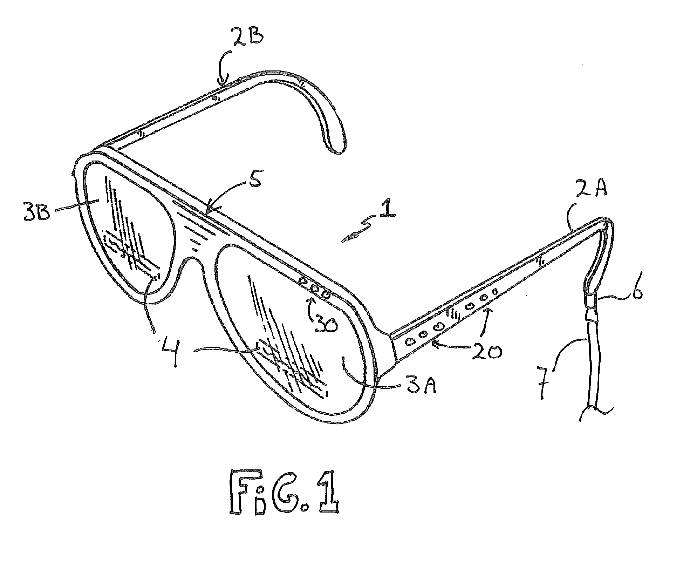

Figure 1 shows an example of a device1 according to the invention. The device in this embodiment is a pair of captioning glasses having all essential parts, viz. the sensor for detection sound waves, the converter for converting the signal generated by the sensor into a second signal that corresponds to the words, the presentation means for presenting the second signal to the first person, and the means to provide the second person information reflecting a property of the speech (the actual feed-back about the quality of speech) incorporated in the pair of glasses. The processing unit that coordinates all function is also part of the pair of glasses.

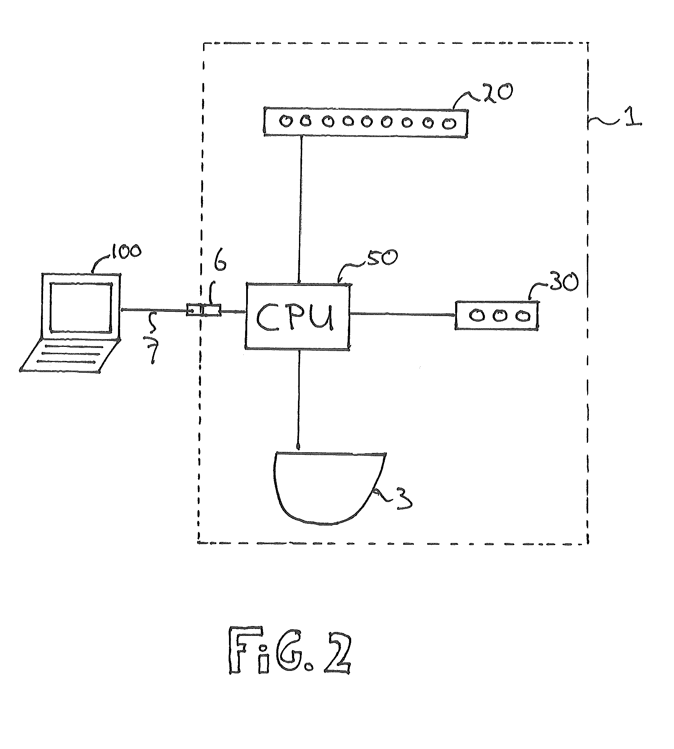

In this particular embodiment the device 1 is a pair of glasses having legs 2A and 2B. Next to these legs, the device comprises two eye-glasses 3A and 3B. These eye-glasses are incorporated by the framework 5. Leg 2A comprises microphone array 20 that is used as a unidirectional sensor for detecting sound waves and converting these waves into an electrical signal. These signals are processed in central processing unit 50 (see figure 2) and a converter that is incorporated in this CPU 50 real-time converts this electrical signal into a text signal that corresponds to sound waves (or actually, the words to go together with these waves). This text 4 is displayed on the eye-glasses so that the wearer of the device can understand what is being said to him. The device is provided with a set of LEDs 30. One of these LEDs can send a red light, one an orange light and one a green light. In this embodiment, the green LED is "on" continuously when the quality of speech appears to be OK, meaning, no thresholds of set parameters (which could be for example only one parameter: the percentage of unrecognised words) are passed. When one of the thresholds is likely to be passed (for example because the number of words per minute is reaching a set maximum) then the orange light starts to blink. If the threshold is indeed passed, the red light starts to blink.

The device is provided with a connector 6, so that the device can be operatively coupled with a computer 100 (see figure 2) via line 7 for example for programming the device. Indeed, such an operative connection could also be established wireless.

### Figure 2

Figure 2 schematically shows parts of the device 1 according to figure 1, the device 1 in this configuration being in operative connection with a computer 100 via connector 6 and line 7. The hart of the device is central processing unit 50. This processing unit incorporates the hardware (a standard microprocessor) programmed with software for controlling the operation of the device. The CPU 50 is connected to the microphone array 20, set of Led lights 30 and display 3 (the eye-glass).

The CPU is programmed with speech recognition software and has a memory (not shown) which keeps multiple libraries of one or more languages. In this embodiment, the memory keeps a UK English library, a Dutch library and a German library. These libraries are used to assess and find the correct words in the speech recognition process as is commonly known in the art. Via computer 100 a user is able to upload even more libraries of for example other languages or dialects in order to enable the CPU to create a second signal of speech in yet another tongue. Also, the computer can be used by the user to update the libraries, for example to ad words that are newly created in the media but not yet available in standard dictionaries.

## Claims

1. A device (1) to be worn by a first person that is hearing impaired, in order to aid this person in understanding a speech of a second person directed to the first person, the device comprising:
- a sensor (20) for detecting sound waves corresponding to words used in the speech and converting these sound waves into a first signal,
- a converter for real-time converting the first signal into a second signal that corresponds to the words,
- presentation means (3) for presenting the second signal to the first person,
**characterised in that** the device comprises means to assess the understandability of the second signal and means (30) to provide the second person information corresponding to the said understandability of the second signal.

2. A device according to claim 1, **characterised in that** the understandability depends on parameters provided by the first person to the device.

3. A device according to any of the preceding claims, **characterised in that** the device comprises a processing unit (50) for assessing the understandability of the second signal and automatically providing the information corresponding to the said understandability to the second person.

4. A device according to any of the preceding claims, **characterised in that** the information is provided by generating one or more light signals.

5. A device according to claim 4, **characterised in that** the one or more light signals are generated by one or more light emitting diodes.

6. A device according to claim 4 or 5, **characterised in that** the light signals have a colour that corresponds to the understandability of the second signal.

7. A device according to any of the preceding claims, **characterised in that** the understandability is assessed using the number of words per time period, and/or a percentage of words recognised.

8. A device according to any of the preceding claims, **characterised in that** the information is additionally presented to the first person.

9. A device according to any of the preceding claims, wherein the second signal comprises one or more symbols, **characterised in that** the symbols are displayed into the field of vision of the first person.

10. A device according to claim 9, **characterised in that** the symbols form text.

11. A device according to any of the preceding claims, **characterised in that** the sensor is in essence unidirectional.

12. A device according to claim 11, **characterised in that** the sensor comprises an array of microphones.

13. A device according to claim 12, **characterised in that** the array is incorporated in a leg of a pair of glasses.

14. A device according to any of the preceding claims, **characterised in that** the device is at least partly incorporated into a pair of glasses.

## Patentansprüche

1. Vorrichtung (1), die von einer ersten Person getragen wird, die hörgeschädigt ist, um diese Person beim Verstehen einer Rede einer zweiten Person zu unterstützen, die an die erste Person gerichtet ist, wobei die Vorrichtung aufweist:
- einen Sensor (20) zum Erfassen von Tonwellen, die Worten entsprechen, die in der Rede verwendet werden, und Umwandeln dieser Tonwellen in ein erstes Signal,
- einen Wandler für eine Echtzeitumwandlung des ersten Signals in ein zweites Signals, das den Worten entspricht,
- Präsentationsmittel (3) zum Präsentieren des zweiten Signals der ersten Person,
**dadurch gekennzeichnet, dass** die Vorrichtung Mittel zum Bewerten der Verständlichkeit des zweiten Signals und Mittel (30) zum Bereitstellen von Informationen für die zweite Person entsprechend der Verständlichkeit des zweiten Signals aufweist.

2. Vorrichtung nach Anspruch 1, **dadurch gekennzeichnet, dass** die Verständlichkeit von Parametern abhängt, die der Vorrichtung von der ersten Person bereitgestellt werden.

3. Vorrichtung nach einem der vorangehenden Ansprüche, **dadurch gekennzeichnet, dass** die Vorrichtung eine Verarbeitungseinheit (50) zum Bewerten der Verständlichkeit des zweiten Signals und automatischen Bereitstellen der Informationen für die zweite Person entsprechend der Verständlichkeit des zweiten Signals aufweist.

4. Vorrichtung nach einem der vorangehenden Ansprüche, **dadurch gekennzeichnet, dass** die Informationen durch Generieren eines Lichtsignals oder mehrerer Lichtsignale bereitgestellt sind.

5. Vorrichtung nach Anspruch 4, **dadurch gekennzeichnet, dass** das eine Lichtsignal oder die mehreren Lichtsignale von einer oder mehreren Leuchtdiode(n) generiert werden.

6. Vorrichtung nach Anspruch 4 oder 5, **dadurch gekennzeichnet, dass** die Lichtsignale eine Farbe haben, die der Verständlichkeit des zweiten Signals entspricht.

7. Vorrichtung nach einem der vorangehenden Ansprüche, **dadurch gekennzeichnet, dass** die Verständlichkeit unter Verwendung der Anzahl pro Worte pro Zeitperiode bewertet wird und/oder eines Prozentsatzes erkannter Worte bewertet wird.

8. Vorrichtung nach einem der vorangehenden Ansprüche, **dadurch gekennzeichnet, dass** die Informationen zusätzlich der ersten Person präsentiert werden.

9. Vorrichtung nach einem der vorangehenden Ansprüche, wobei das zweite Signal ein oder mehrere Symbol(e) aufweist, **dadurch gekennzeichnet, dass** die Symbole im Sichtfeld der ersten Person angezeigt sind.

10. Vorrichtung nach Anspruch 9, **dadurch gekennzeichnet, dass** die Symbole Text bilden.

11. Vorrichtung nach einem der vorangehenden Ansprüche, **dadurch gekennzeichnet, dass** der Sensor im Prinzip einseitig gerichtet ist.

12. Vorrichtung nach Anspruch 11, **dadurch gekennzeichnet, dass** der Sensor eine Gruppe von Mikrofonen aufweist.

13. Vorrichtung nach Anspruch 12, **dadurch gekennzeichnet, dass** die Gruppe in einem Bügel einer Brille eingegliedert ist.

14. Vorrichtung nach einem der vorangehenden Ansprüche, **dadurch gekennzeichnet, dass** die Vorrichtung zumindest teilweise in einer Brille eingegliedert ist.

## Revendications

1. Dispositif (1) destiné à être porté par une première personne qui est malentendante, afin d'aider cette personne à comprendre la parole d'une seconde personne dirigée vers la première personne, le dispositif comprenant :
un capteur (20) destiné à détecter des ondes sonores correspondant à des mots utilisés dans la parole et à convertir ces ondes sonores en un premier signal,
un convertisseur pour convertir en temps réel le premier signal en un second signal qui correspond aux mots,
des moyens de présentation (3) pour présenter le second signal à la première personne,
**caractérisé en ce que** le dispositif comprend des moyens pour évaluer l'intelligibilité du second signal et des moyens (30) pour fournir à la seconde personne des informations correspondant à ladite intelligibilité du second signal.

2. Dispositif selon la revendication 1, **caractérisé en ce que** l'intelligibilité dépend de paramètres fournis par la première personne au dispositif.

3. Dispositif selon l'une quelconque des revendications précédentes, **caractérisé en ce que** le dispositif comprend une unité de traitement (50) pour évaluer l'intelligibilité du second signal et délivrer automatiquement les informations correspondant à ladite intelligibilité à la seconde personne.

4. Dispositif selon l'une quelconque des revendications précédentes, **caractérisé en ce que** les informations sont délivrées en générant un ou plusieurs signaux lumineux.

5. Dispositif selon la revendication 4, **caractérisé en ce qu'**un ou plusieurs signaux lumineux sont générés par une ou plusieurs diodes électroluminescentes.

6. Dispositif selon la revendication 4 ou la revendication 5, **caractérisé en ce que** les signaux lumineux ont une couleur qui correspond à l'intelligibilité du second signal.

7. Dispositif selon l'une quelconque des revendications précédentes, **caractérisé en ce que** l'intelligibilité est évaluée en utilisant le nombre de mots par période de temps, et/ou un pourcentage de mots reconnus.

8. Dispositif selon l'une quelconque des revendications précédentes, **caractérisé en ce que** les informations sont en outre présentées à la première personne.

9. Dispositif selon l'une quelconque des revendications précédentes, dans lequel le second signal comprend un ou plusieurs symboles, **caractérisé en ce que** les symboles sont affichés dans le champ de vision de la première personne.

10. Dispositif selon la revendication 9, **caractérisé en ce que** les symboles forment un texte.

11. Dispositif selon l'une quelconque des revendications précédentes, **caractérisé en ce que** le capteur est par essence unidirectionnel.

12. Dispositif selon la revendication 11, **caractérisé en ce que** le capteur comprend un réseau de microphones.

13. Dispositif selon la revendication 12, **caractérisé en ce que** le réseau est incorporé dans une branche d'une paire de lunettes.

14. Dispositif selon l'une quelconque des revendications précédentes, **caractérisé en ce que** le dispositif est au moins en partie incorporé dans une paire de lunettes.
